# EUROPEAN PATENT APPLICATION

(11) **EP 3 813 390 A1**
(43) Date of publication of application: **28.04.2021**
(21) Application number: 19825403.9
(22) Date of filing: 18.06.2019
(51) Int. Cl.: H04W 4/06, H04W 4/08, H04W 56/00

(54) **COMMUNICATION METHOD, DEVICE AND SYSTEM**

(30) Priority: 25.06.2018 CN 201810663252
(71) Applicant: Huawei Technologies Co., Ltd., Longgang District Shenzhen, Guangdong province 518129 (CN)
(72) Inventor: YUAN, Pu, Shenzhen, Guangdong 518129 (CN); XIANG, Zhengzheng, Shenzhen, Guangdong 518129 (CN)
(74) Representative: MERH-IP Matias Erny Reichl Hoffmann Patentanwälte PartG mbB
(86) International application number: PCT/CN2019/091757
(87) International publication number: WO 2020/001330

(57) **Abstract**

This application provides a communication method, a terminal device, and a system, to improve communication efficiency and reduce signaling overheads. The method includes: sending, by a first terminal device, a first message to a second terminal device, where the first message is used to establish a multicast group, and the multicast group includes the first terminal device and the second terminal device; receiving, by the first terminal device, a second message from the second terminal device, where the second message is used to respond to the first message; obtaining, by the first terminal device, a first timing advance value of the second terminal device relative to the first terminal device based on the first message and the second message; and sending, by the first terminal device, a third message to the second terminal device, where the third message includes the first timing advance value.

## Description

This application claims priority to Chinese Patent Application No. 201810663252.0, filed with the Chinese Patent Office on June 25, 2018 and entitled "COMMUNICATIONS METHOD, DEVICE, AND SYSTEM", which is incorporated herein by reference in its entirety.

### TECHNICAL FIELD

This application relates to the communications field, and in particular, to a communications method, device, and system.

### BACKGROUND

In a long term evolution (long term evolution, LTE) system, to maintain uplink synchronization, a base station requires that time at which signals, of different user equipments (user equipment, UE), from different frequency domain resources in a same subframe arrive at the base station is basically aligned, so that the base station correctly decodes uplink data sent by the UEs. To ensure timing synchronization on a base station side, a timing advance (time advance, TA) mechanism is proposed in a related technology. The base station indicates, to each UE, a TA of the UE relative to the base station, to control time at which uplink signals from different UE arrive at the base station. For example, UE farther away from the base station has a larger a transmission delay, and needs to send uplink data in advance of UE closer to the base station. The TA may be a parameter used to represent a timing offset of data that is sent by the UE and that is received by the base station.

With the advancement of technologies, timing synchronization also needs to be implemented in some other communications systems in the future, but there is no related definition in the industry. For example, in vehicle-to-vehicle (vehicle-to-vehicle, V2V) communication, how to implement timing synchronization between vehicle-mounted devices is an urgent problem to be resolved.

### SUMMARY

This application provides a communication method, a terminal device, and a system, to improve communication efficiency.

According to a first aspect, a communication method is provided, including: sending, by a first terminal device, a first message to a second terminal device, where the first message is used to establish a multicast group, and the multicast group includes the first terminal device and the second terminal device; receiving, by the first terminal device, a second message from the second terminal device, where the second message is used to confirm that the second terminal device belongs to the multicast group; obtaining, by the first terminal device, a first timing advance value of the second terminal device relative to the first terminal device based on the first message and the second message; and sending, by the first terminal device, a third message to the second terminal device, where the third message includes the first timing advance value.

In this embodiment of this application, a timing synchronization procedure between terminal devices is designed, and functions of the first message and the second message are multiplexed, so that the timing synchronization is also implemented in a phase of establishing the multicast group, thereby saving signaling and improving communication efficiency.

In a possible implementation, the first message is a sequence signal that can be detected.

In this embodiment of this application, the first message is a sequence signal that can be detected, so that the second terminal device detects the first message, returns the second message after detecting the first message, and obtains the first timing advance value based on the first message and the second message. Functions of the first message and the second message are multiplexed, so that the timing synchronization is also implemented in a phase of establishing the multicast group, thereby saving signaling and improving the communication efficiency.

In a possible implementation, the sequence signal that can be detected is a pseudo-random sequence signal.

In this embodiment of this application, the first message is a pseudo-random sequence signal, so that the second terminal device detects the first message, returns the second message after detecting the first message, and obtains the first timing advance value based on the first message and the second message. Functions of the first message and the second message are multiplexed, so that the timing synchronization is also implemented in a phase of establishing the multicast group, thereby saving signaling and improving the communication efficiency.

In a possible implementation, the obtaining, by the first terminal device, a first timing advance value of the second terminal device relative to the first terminal device based on the first message and the second message includes: obtaining, by the first terminal device, the first timing advance value based on a sending moment of the first message and a receiving moment of the second message.

In a possible implementation, the multicast group further includes a third terminal device, and the method further includes: receiving, by the first terminal device, an intra-group synchronization signal sent by the third terminal device; sending, by the first terminal device, a feedback acknowledgment message to the third terminal device, where the feedback acknowledgment message is used to respond to the intra-group synchronization signal; and receiving, by the first terminal device, a fourth message sent by the third terminal device, where the fourth message includes a second timing advance value, the second timing advance value is a timing advance value of the first terminal device relative to the third terminal device, and the second timing advance value is obtained by the third terminal device based on the intra-group synchronization signal and the feedback acknowledgment message.

In this embodiment of this application, after establishing the multicast group, the first terminal device may receive the intra-group synchronization signal sent by the third terminal device in the multicast group, to obtain the second timing advance value of the first terminal device relative to the third terminal device from the third terminal device. Therefore, a timing synchronization mechanism in a multicast mechanism is provided, thereby improving communication efficiency.

In a possible implementation, the third message further includes an identifier of the second terminal device.

In a possible implementation, the first message includes a group identifier of the multicast group.

In a possible implementation, the second message includes the identifier of the second terminal device and the group identifier.

In a possible implementation, the first terminal device and the second terminal device are vehicle-mounted devices.

According to a second aspect, a communication method is provided, including: receiving, by a second terminal device, a first message from a first terminal device, where the first message is used to establish a multicast group, and the multicast group includes the first terminal device and the second terminal device; sending, by the second terminal device, a second message to the first terminal device, where the second message is used to confirm that the second terminal device belongs to the multicast group; and receiving, by the second terminal device, a third message from the first terminal device, where the third message includes a first timing advance value, the first timing advance value is a timing advance value of the second terminal device relative to the first terminal device, and the first timing advance value is obtained by the first terminal device based on the first message and the second message.

In this embodiment of this application, a timing synchronization procedure between terminal devices is designed, and functions of the first message and the second message are multiplexed, so that the timing synchronization is also implemented in a phase of establishing the multicast group, thereby saving signaling and improving communication efficiency.

In a possible implementation, the first message is a sequence signal that can be detected.

In this embodiment of this application, the first message is a sequence signal that can be detected, so that the second terminal device detects the first message, returns the second message after detecting the first message, and obtains the first timing advance value based on the first message and the second message. Functions of the first message and the second message are multiplexed, so that the timing synchronization is also implemented in a phase of establishing the multicast group, thereby saving signaling and improving the communication efficiency.

In a possible implementation, the sequence signal that can be detected is a pseudo-random sequence signal.

In this embodiment of this application, the first message is a pseudo-random sequence signal, so that the second terminal device detects the first message, returns the second message after detecting the first message, and obtains the first timing advance value based on the first message and the second message. Functions of the first message and the second message are multiplexed, so that the timing synchronization is also implemented in a phase of establishing the multicast group, thereby saving signaling and improving the communication efficiency.

In a possible implementation, the first message includes a group identifier of the multicast group.

In a possible implementation, the second message includes an identifier of the second terminal device and the group identifier.

In a possible implementation, after the receiving, by the second terminal device, the third message from the first terminal device, the method further includes: sending, by the second terminal device, an intra-group synchronization signal to a fourth terminal device, where the multicast group further includes the fourth terminal device; receiving, by the second terminal device, a feedback acknowledgment message from the fourth terminal device, where the feedback acknowledgment message is used to respond to the intra-group synchronization signal; obtaining, by the second terminal device, a third timing advance value of the fourth terminal device relative to the second terminal device based on the intra-group synchronization signal and the feedback acknowledgment message; and sending, by the second terminal device, a fifth message to the fourth terminal device, where the fifth message includes the third timing advance value.

In this embodiment of this application, after establishing the multicast group, the second terminal device may send the intra-group synchronization signal to another terminal device in the multicast group, to obtain a third timing advance value of the another terminal device relative to the second terminal device, and indicate the third timing advance value to the another terminal device. Therefore, a timing synchronization mechanism in a multicast mechanism is provided, thereby improving communication efficiency.

In a possible implementation, the obtaining, by the second terminal device, a third timing advance value of the fourth terminal device relative to the second terminal device based on the intra-group synchronization signal and the feedback acknowledgment message includes: obtaining, by the second terminal device, the third timing advance value based on a sending moment of the intra-group synchronization signal and a receiving moment of the feedback acknowledgment message.

In a possible implementation, the intra-group synchronization signal includes the group identifier and the identifier of the second terminal device.

In a possible implementation, the fifth message further includes an identifier of the fourth terminal device.

In a possible implementation, the method further includes: obtaining, by the second terminal device, a fourth timing advance value of the second terminal device relative to a fifth terminal device based on a first distance, a second distance, and the first timing advance value, where the first distance is a first distance between the second terminal device and the first terminal device, and the second distance is a second distance between the second terminal device and the fifth terminal device.

In a possible implementation, the first terminal device and the second terminal device are vehicle-mounted devices.

According to a third aspect, a terminal device is provided. The terminal device is configured to perform the method in any one of the first aspect or the possible implementations of the first aspect. Specifically, the terminal device includes a unit configured to perform the method in any one of the first aspect or the possible implementations of the first aspect.

According to a fourth aspect, a terminal device is provided. The terminal device is configured to perform the method in any one of the second aspect or the possible implementations of the second aspect. Specifically, the terminal device includes a unit configured to perform the method according to any one of the second aspect or the possible implementations of the second aspect.

According to a fifth aspect, a terminal device is provided. The terminal device includes a communications interface, a memory, and a processor. The memory is configured to store an instruction, the processor is configured to execute the instruction stored in the memory, to control the communications interface to receive a signal and/or send a signal, and when the processor executes the instruction stored in the memory, the execution enables the processor to perform the method according to any one of the first aspect or the possible implementations of the first aspect.

According to a sixth aspect, a terminal device is provided. The terminal device includes a communications interface, a memory, and a processor. The communications interface, the memory, and the processor are connected through a bus system. The memory is configured to store an instruction. The processor is configured to execute the instruction stored in the memory, to control the communications interface to receive a signal and/or send a signal. In addition, when the processor executes the instruction stored in the memory, the execution enables the processor to perform the method according to any one of the second aspect or the possible implementations of the second aspect.

According to a seventh aspect, a communications system is provided. The communications system includes the terminal devices in the third aspect and the fourth aspect, or includes the terminal devices in the fifth aspect and the sixth aspect.

According to an eighth aspect, a computer-readable medium is provided. The computer-readable medium is configured to store a computer program, where the computer program includes an instruction used to perform the method according to any one of the first aspect or the possible implementations of the first aspect.

According to a ninth aspect, a computer-readable medium is provided. The computer-readable medium is configured to store a computer program, where the computer program includes an instruction used to perform the method according to any one of the second aspect or the possible implementations of the second aspect.

### BRIEF DESCRIPTION OF DRAWINGS

FIG. 1 is a schematic diagram of a possible application scenario according to an embodiment of this application;
FIG. 2 is a schematic diagram of a possible application scenario according to another embodiment of this application;
FIG. 3 is a schematic flowchart of a communication method according to an embodiment of this application;
FIG. 4 is a schematic diagram of a possible application scenario according to another embodiment of this application;
FIG. 5 is a schematic flowchart of a communication method according to another embodiment of this application;
FIG. 6 is a schematic flowchart of a communication method according to another embodiment of this application;
FIG. 7 is a schematic flowchart of a communication method according to another embodiment of this application;
FIG. 8 is a schematic structural diagram of a terminal device according to an embodiment of this application;
FIG. 9 is a schematic structural diagram of a terminal device according to another embodiment of this application;
FIG. 10 is a schematic structural diagram of a terminal device according to another embodiment of this application; and
FIG. 11 is a schematic structural diagram of a terminal device according to another embodiment of this application.

### DESCRIPTION OF EMBODIMENTS

The following describes technical solutions of this application with reference to accompanying drawings.

The technical solutions of the embodiments of this application may be applied to various communications systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), a universal mobile telecommunications system (universal mobile telecommunication system, UMTS), a worldwide interoperability for microwave access (worldwide interoperability for microwave access, WiMAX) communications system, a future 5th generation (5th generation, 5G) system, or a new radio (new radio, NR) system.

A terminal device in the embodiments of this application may be a vehicle-mounted device, a vehicle-mounted terminal device, vehicle-mounted user equipment, a vehicle, a road side unit (road side unit, RSU), user equipment, an access terminal, a user unit, a user station, a mobile station, a mobile console, a remote station, a remote terminal, a mobile device, a user terminal, a terminal, and a wireless communications device. Alternatively, the terminal device may be a terminal device in a future 5G network, a terminal device in a future evolved public land mobile network (public land mobile network, PLMN), or the like. This is not limited in the embodiments of this application.

In the communications system, because there is always a specific physical distance between a transmit end and a receive end, a signal transmission delay is caused when the transmit end communicates with the receive end. If no measures are taken, for the receive end, due to the delay, a message sent by the transmit end in a current slot may overlap another message received by the receive end in the next slot. As a result, the receive end cannot correctly decode signals. Therefore, a timing synchronization mechanism is proposed in the prior art to resolve the foregoing problem. However, a solution of how to implement the timing synchronization mechanism in a multicast scenario is not provided in the related technology.

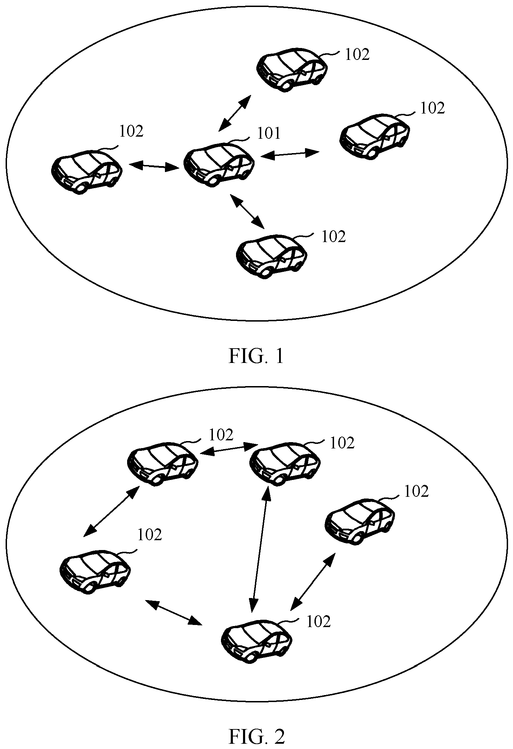

According to a communication method in the embodiment of this application, a multicast-oriented timing synchronization mechanism may be proposed. The method may be applied to scenarios shown in FIG. 1 and FIG. 2 or other similar multicast scenarios.

FIG. 1 and FIG. 2 are schematic diagrams of a possible application scenario according to an embodiment of this application. In this application scenario, there may be a plurality of terminal devices, and the plurality of terminal devices may form a terminal device set. The plurality of terminal devices may communicate with each other in a plurality of manners. For example, a broadcast manner, a unicast manner, or a multicast manner may be used. The multicast may mean that a plurality of terminal devices form a group according to a specific rule, and a form of the multicast is limited to members in the group. The foregoing specific rule may be a principle that terminal devices of a same service or in neighboring cells are divided into a group, for example. The foregoing plurality of terminal devices may be vehicle-mounted devices, vehicles, or the like.

For example, the foregoing terminal devices are vehicle-mounted devices. In a multicast mode, the following two cases may be included based on different grouping forms of vehicle-mounted devices. Case 1: As shown in FIG. 1, a vehicle-mounted device set includes a leader vehicle (leader) 101, and other vehicle-mounted devices, which are referred to as member vehicles (member) 102. The member vehicles 102 need to communicate with each other by using the leader vehicle 101. The leader vehicle may also be referred to as a first vehicle, and the leader vehicle may be an initiator that establishes a multicast group. The scenario may be, for example, a vehicle platooning (platooning) scenario defined in NR-V2V Case 2: As shown in FIG. 2, statuses of all vehicle-mounted devices in the vehicle-mounted device set are equal, the vehicle-mounted devices may all be referred to as member vehicles 102, and the member vehicles 102 may freely communicate with each other. In Case 2, timing synchronization between each member vehicle 102 and any other member vehicle 102 needs to be implemented.

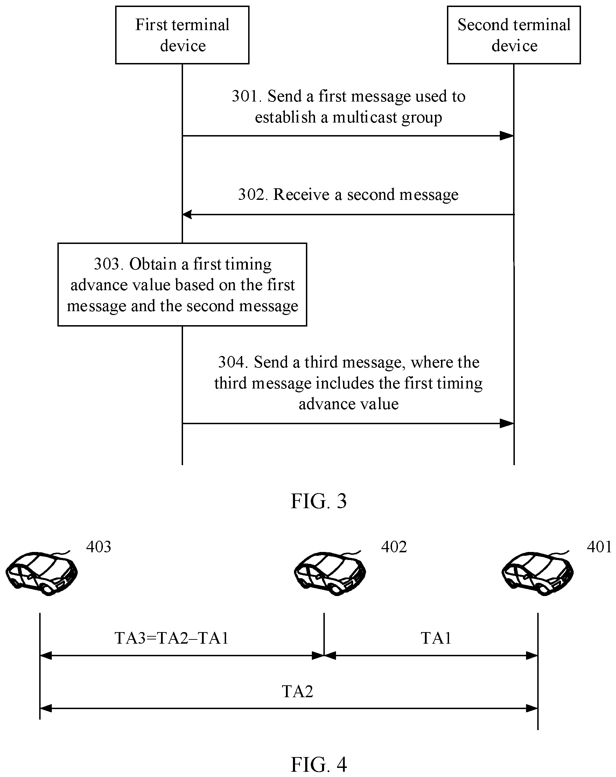

FIG. 3 is a schematic flowchart of a communication method 300 according to an embodiment of this application. As shown in FIG. 3, the method 300 includes the following steps.

S301. A first terminal device sends a first message to a second terminal device, and correspondingly, the second terminal device receives the first message, where the first message is used to establish a multicast group, and the multicast group includes the first terminal device and the second terminal device.

Optionally, the first message may be a group establishment message or a group establishment request message.

Optionally, the first terminal device and the second terminal device each may be a vehicle-mounted device, a vehicle, vehicle-mounted user equipment, a roadside unit (road side unit, RSU), user equipment, an access terminal, a user unit, a user station, a mobile station, a mobile console, a remote station, a remote terminal, a mobile device, a user terminal, a terminal, and a wireless communications device. Alternatively, the terminal device may be a terminal device in a future 5G network, a terminal device in a future evolved public land mobile network (Public Land Mobile Network, PLMN), or the like. This is not limited in this embodiment of this application.

Optionally, the first message is a sequence signal that can be detected. For example, the first message may be a binary sequence. Alternatively, the first message may be a pseudo-random sequence. This helps another terminal device in the multicast group detect the first message. Alternatively, the first message may be a signal in another form, provided that the another terminal device can detect the first message.

Optionally, the first terminal device may be the leader vehicle 101 in FIG. 1, and the second terminal device may be any member vehicle 102 in FIG. 1. Alternatively, the first terminal device may be any member vehicle 102 in FIG. 2, and the first terminal device may be referred to as a member vehicle that initiates group establishment. The second terminal device may be a member vehicle 102 other than the member vehicle 102 that initiates group establishment.

Optionally, the first message may include a group identifier (identifier, ID) of the multicast group. This helps remaining terminal devices in the multicast group identify the group identifier.

Optionally, the group identifier may be a group identifier allocated based on different service types. For example, the base station may pre-allocate the group identifier to the terminal device. Different service types may correspond to different group identifiers.

S302. The first terminal device receives a second message from the second terminal device, and correspondingly, the second terminal device sends the second message to the first terminal device, where the second message is used to confirm that the second terminal device belongs to the multicast group.

Optionally, the second message may be a group establishment acknowledgment message.

Optionally, the second message may be an acknowledgement (acknowledge, ACK) signal, or a signal of another type.

Optionally, the second message may include the group identifier and an identifier of the second terminal device. The group identifier may be indicated in an explicit manner, or may be indicated in an implicit manner. For example, in the implicit manner, the second message may be scrambled by using the group identifier. The identifier of the second terminal device may be an identifier allocated by a cell to the second terminal device. For example, the identifier may be a cell radio network temporary identifier (cell radio network temporary identifier, C-RNTI).

S303. The first terminal device obtains a first timing advance value of the second terminal device relative to the first terminal device based on the first message and the second message.

The first timing advance value is a timing advance value of the second terminal device relative to the first terminal device. The second terminal device is a transmit end, and the first terminal device is a receive end. The timing advance value is a parameter used to indicate a timing offset for sending data by the transmit end to the receive end. In other words, the timing advance value is an offset of time at which the second terminal device sends data to the first terminal device. For example, if an offset indicated by the timing advance value is 1 microsecond (µs), the second terminal device needs to send a signal to the first terminal device 1 µs in advance.

Optionally, the first terminal device may obtain the first timing advance value of the second terminal device relative to the first terminal device in a plurality of manners. For example, the first terminal device may obtain the first timing advance value based on a sending moment of the first message and a receiving moment of the second message. For example, assuming that the sending moment of the first message is T1, and the receiving moment of the second message is T2, the first terminal device may determine that the first timing advance value is (T2-T1)/2. For another example, assuming that the sending moment of the first message is T1, the receiving moment of the second message is T2, and a processing time after the second terminal receives the first message is Δt, the first terminal device may determine that the first timing advance value is (T2-T1-Δt)/2, T2>T1>0, and Δt≥0.

S304. The first terminal device sends a third message to the second terminal device, where the third message includes the first timing advance value.

Optionally, the third message may further carry the identifier of the second terminal device. The identifier of the second terminal device is used to indicate that the first timing advance value corresponds to the second terminal device.

Optionally, after receiving the timing advance value, the second terminal device may send data to the first terminal device based on the first timing advance value, so that the first terminal device can normally receive and decode the data sent by the second terminal device.

In this embodiment of this application, a timing synchronization procedure between terminal devices is designed, and functions of the first message and the second message are multiplexed, so that the timing synchronization is also implemented in a phase of establishing the multicast group, thereby saving signaling and improving communication efficiency.

In this embodiment of this application, the first message is a sequence signal that can be detected, so that the second terminal device detects the first message, returns the second message after detecting the first message, and obtains the first timing advance value based on the first message and the second message. Functions of the first message and the second message are multiplexed, so that the timing synchronization is also implemented in a phase of establishing the multicast group, thereby saving signaling and improving the communication efficiency.

In the scenario of FIG. 2, the member vehicles can freely communicate with each other. Therefore, timing synchronization needs to be implemented between the member vehicles. The first terminal device may be the member vehicle that initiates group establishment in FIG. 2. Therefore, when the first terminal device sends data to another terminal device, a timing advance value of the first terminal device relative to the another terminal device also needs to be obtained.

For example, after step S304, that is, after the group establishment procedure, the method 300 further includes: receiving, by the first terminal device, an intra-group synchronization signal sent by the third terminal device; sending, by the first terminal device, a feedback acknowledgment message to the third terminal device, where the feedback acknowledgment message is used to respond to the intra-group synchronization signal; and receiving, by the first terminal device, a fourth message sent by the third terminal device, where the fourth message includes a second timing advance value, where the second timing advance value is a timing advance value of the first terminal device relative to the third terminal device, and the second timing advance value is obtained by the third terminal device based on the intra-group synchronization signal and the feedback acknowledgment message.

The second timing advance value may be obtained based on a sending moment of the intra-group synchronization signal and a receiving moment of the feedback acknowledgment message.

In this embodiment of this application, after establishing the multicast group, the first terminal device may receive the intra-group synchronization signal sent by the third terminal device in the multicast group, to obtain the second timing advance value of the first terminal device relative to the third terminal device from the third terminal device. Therefore, a timing synchronization mechanism in a multicast mechanism is provided, thereby improving communication efficiency.

In some examples, the intra-group synchronization signal may be a sequence signal that can be detected, for example, a binary sequence signal, a pseudo-random sequence signal, or another type of signal.

In this embodiment of this application, the intra-group synchronization signal is a sequence signal that can be detected, so that the second terminal device detects the intra-group synchronization signal, returns the feedback acknowledgment message after detecting the intra-group synchronization signal, and obtains the second timing advance value based on the intra-group synchronization signal and the feedback acknowledgment message, thereby providing an effective timing synchronization method for the multicast-oriented mechanism.

The second timing advance value is a timing advance value of the first terminal device relative to the third terminal device. In other words, the second timing advance value is an offset of time at which the first terminal device sends data to the third terminal device. For example, if an offset indicated by the timing advance value is 1 microsecond (µs), the first terminal device needs to send a signal to the third terminal device 1 µs in advance.

The first terminal device may send data to the third terminal device based on the second timing advance value. The first terminal device may be any member vehicle in FIG. 2, and the third terminal device may be any terminal device other than the first terminal device in the multicast group.

Optionally, after step S304, the method 300 further includes: sending, by the second terminal device, the intra-group synchronization signal to a fourth terminal device, where the multicast group further includes the fourth terminal device, and correspondingly, receiving, by the fourth terminal device, the intra-group synchronization signal; sending, by the fourth terminal device, the feedback acknowledgment message to the second terminal device, and correspondingly, receiving, by the second terminal device, the feedback acknowledgment message from the fourth terminal device, where the feedback acknowledgment message is used to respond to the intra-group synchronization signal; obtaining, by the second terminal device, a third timing advance value of the fourth terminal device relative to the second terminal device based on the intra-group synchronization signal and the feedback acknowledgment message; and sending, by the second terminal device, the third timing advance value to the fourth terminal device.

In some examples, the intra-group synchronization signal may be a sequence signal that can be detected, for example, a binary sequence signal, a pseudo-random sequence signal, or another type of signal.

The third timing advance value is a timing advance value of the fourth terminal device relative to the second terminal device. In other words, the third timing advance value is an offset of time at which the fourth terminal device sends data to the second terminal device. For example, if an offset indicated by the timing advance value is 1 microsecond (µs), the fourth terminal device needs to send a signal to the second terminal device 1 µs in advance.

In this embodiment of this application, after establishing the multicast group, the second terminal device may send an intra-group synchronization signal to another terminal device in the multicast group, to obtain a third timing advance value of the another terminal device relative to the second terminal device, and indicate the third timing advance value to the another terminal device. Therefore, a timing synchronization mechanism in a multicast mechanism is provided, thereby improving communication efficiency.

Optionally, the obtaining, by the second terminal device, a third timing advance value of the fourth terminal device relative to the second terminal device based on the intra-group synchronization signal and the feedback acknowledgment message includes: obtaining, by the second terminal device based on the sending moment of the intra-group synchronization signal and the receiving moment of the feedback acknowledgment message, the third timing advance value.

For a manner of obtaining the third timing advance value, refer to related descriptions of obtaining a timing advance value in the foregoing description.

Optionally, the intra-group synchronization signal may include the group identifier and the identifier of the second terminal device. For example, the group identifier may be indicated in the explicit or implicit manner. For example, the intra-group synchronization signal may be scrambled by using the group identifier.

In some examples, the sending, by the second terminal device, the third timing advance value to the fourth terminal device includes: sending, by the second terminal device, the second message to the fourth terminal device, where the second message includes the third timing advance value and an identifier of the fourth terminal device. The identifier of the fourth terminal device is corresponding to the third timing advance value.

Optionally, the multicast group further includes a fifth terminal device. The method further includes: obtaining, by the second terminal device, a fourth timing advance value of the second terminal device relative to the fifth terminal device based on a first distance, a second distance, and the first timing advance value, where the first distance is a first distance between the second terminal device and the first terminal device, and the second distance is a second distance between the second terminal device and the fifth terminal device. The fifth terminal device may be any member vehicle other than the second terminal device in the multicast group.

To be specific, the second terminal device may determine the fourth timing advance value of the second terminal device relative to the fifth terminal device based on the first timing advance value and the distance between the terminal devices, so that the second terminal device sends data to the fifth terminal device based on the fourth timing advance value.

In principle, a timing advance value is in direct proportion to a distance, that is, the shorter the distance is, the smaller the timing advance value is, and the longer the distance is, the larger the timing advance value is. For example, assuming that the first distance is d1, the second distance is d2, and the first timing advance value is TA1, the fourth timing advance value TA4 may be obtained based on a ratio of the first distance to the second distance. That is, TA4=(d2/d1)xTA1.

In another example, FIG. 4 is a schematic diagram of an application environment according to another embodiment of this application. For example, when the plurality of terminal devices move in a road direction on a same side, assuming that a timing advance value of a second terminal device 402 relative to a first terminal device 401 is TA1, and a timing advance value of a third terminal device 403 relative to the first terminal device 401 is TA2, a timing advance value of the third terminal device 403 relative to the second terminal device is TA3=TA2-TA1.

For example, the first terminal device 401 may send a broadcast message to all other terminal devices, where the broadcast message includes identifiers of all terminal devices in a multicast group and timing advance values of the other terminal devices relative to the first terminal device 401. After receiving the message, another terminal device obtains a timing advance value of the another terminal device relative to the first terminal device 401, and also obtains timing advance values of other terminal devices relative to the first terminal device 401. For example, a timing advance value of the second terminal device 402 relative to the first terminal device 401 is TA1, and a timing advance value of the third terminal device relative to the first terminal device 401 is TA2. In this case, when the third terminal device needs to send a message to the second terminal device, the third terminal device may calculate a timing advance value TA3 of the third terminal device 403 relative to the second terminal device 402, that is, TA3=TA2-TA1. In addition, it should be noted that, in this case, the timing advance value TA3 of the third terminal device relative to the second terminal device is the same as a timing advance value TA3' of the second terminal device relative to the third terminal device. That is, TA3'-TA2-TA1.

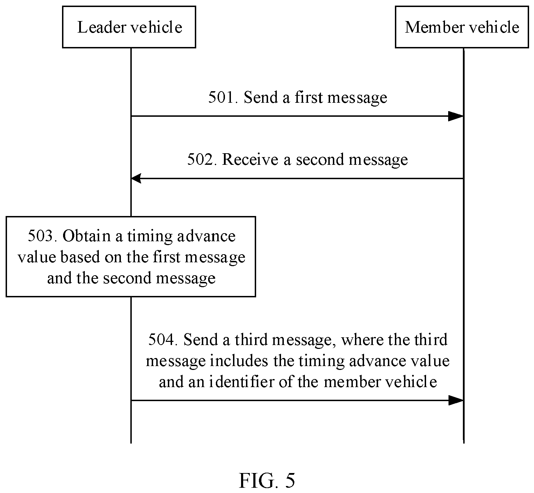

FIG. 5 is a specific schematic flowchart of a communication method according to another embodiment of this application. In the scenario of FIG. 5, assuming that the terminal device is a vehicle, and a multicast group includes one leader vehicle and plurality of member vehicles. Therefore, the member vehicles need to communicate with each other by using the leader vehicle. In this case, the leader vehicle initiates a group establishment process, and completes timing synchronization between the member vehicles and the leader vehicle during the group establishment process. For brevity, content in FIG. 5 that is the same as or similar to that in the foregoing description is not described herein again. The method in FIG. 5 includes the following steps.

S501. A leader vehicle sends a first message, where the first message is used to establish a multicast group, and correspondingly, a member vehicle receives the first message.

In some examples, the first message is a sequence signal that can be detected. The first message may be used to indicate a group identifier of the multicast group.

S502. The member vehicle detects the first message, and sends a second message to the leader vehicle. Correspondingly, the leader vehicle receives the second message.

Optionally, the second message may be scrambled by using the group identifier. Optionally, the second message may indicate an identifier of the member vehicle.

S503. The leader vehicle obtains a timing advance value of the member vehicle relative to the leader vehicle based on the first message and the second message.

S504. The leader vehicle sends a third message to the member vehicle, where the third message is used to indicate the identifier of the member vehicle and the corresponding timing advance value.

In this embodiment of this application, the group establishment process and the timing synchronization process are implemented by multiplexing the first message and the second message. In the foregoing signaling interaction process, the leader vehicle obtains the identifier of the member vehicle, and the member vehicle obtains the timing advance value of the member vehicle relative to the leader vehicle. Therefore, by designing the corresponding group establishment and synchronization processes, signaling overheads are reduced, a delay is reduced, and communication efficiency is improved.

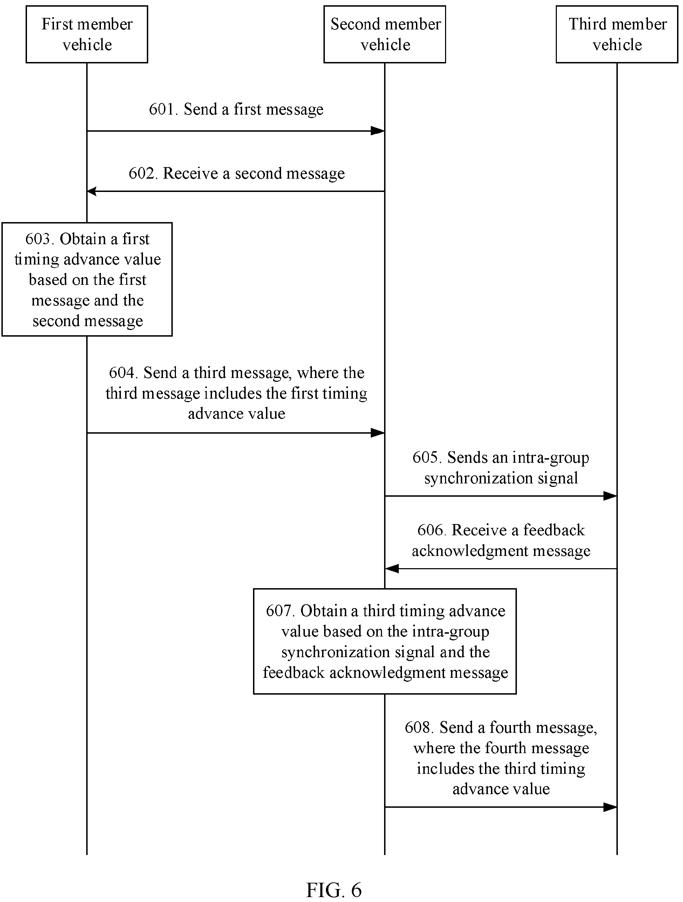

FIG. 6 is a specific schematic flowchart of a communication method according to another embodiment of this application. In the scenario of FIG. 6, it is assumed that the terminal devices are vehicles. The multicast group includes a plurality of member vehicles, and the member vehicles in the multicast group can freely communicate with each other. In this scenario, a member vehicle in the group may be at any location, and any member vehicle initiates group establishment. For brevity, content in FIG. 6 that is the same as or similar to that in the foregoing description is not described herein again. The method in FIG. 6 includes the following steps.

S601. A first member vehicle sends a first message, where the first message is used to establish a multicast group, and correspondingly, a second member vehicle in the multicast group receives the first message.

Optionally, the first message may be a group establishment message or a group establishment request message.

In some examples, the first message is a sequence signal that can be detected. The first message may be used to indicate a group identifier of the multicast group.

The first member vehicle is a member vehicle that initiates a group establishment procedure. The first member vehicle may be any member vehicle in the multicast group. The second member vehicle may be any member vehicle other than the member vehicle in the multicast group.

S602. The second member vehicle detects the first message and sends a second message to the first member vehicle, and correspondingly, the first member vehicle receives the second message.

Optionally, the second message may be a group establishment acknowledgment message.

Optionally, the second message may be scrambled by using a group identifier, and the second message may be further used to indicate an identifier of the second member vehicle. For example, the second message includes the identifier of the second member vehicle.

S603. The first member vehicle obtains a first timing advance value of the second member vehicle relative to the first member vehicle based on the first message and the second message.

S604. The first member vehicle sends the first timing advance value to the second member vehicle.

For example, the first member vehicle may send a third message to the second member vehicle, where the third message includes the identifier of the second member vehicle and the first timing advance value corresponding to the identifier.

S605. After receiving the first timing advance value, the second member vehicle may send an intra-group synchronization signal to a third member vehicle, and correspondingly, the third member vehicle receives the intra-group synchronization signal.

The third member vehicle may be any member vehicle other than the second member vehicle in the multicast group.

In an example, the intra-group synchronization signal is a sequence signal that can be detected, for example, a pseudo-random sequence signal.

In an example, the intra-group synchronization signal may include the group identifier and the identifier of the second member vehicle.

S606. After receiving the intra-group synchronization signal, the third member vehicle may send a feedback acknowledgment message to the second member vehicle, and correspondingly, the third member vehicle receives the feedback acknowledgment message.

The third member vehicle may detect the intra-group synchronization signal, and send the feedback acknowledgment message after detecting the intra-group synchronization signal.

Optionally, the feedback acknowledgment message may include the group identifier and an identifier of the third member vehicle.

S607. The second member vehicle obtains a third timing advance value of the third member vehicle relative to the second member vehicle based on the feedback acknowledgment message.

S608. The second member vehicle sends the third timing advance value to the third member vehicle. Correspondingly, the third member vehicle receives the third timing advance value.

For example, the second member vehicle may send a fifth message to the third member vehicle, where the fifth message includes the identifier of the third member vehicle and the third timing advance value.

In this embodiment of this application, the group establishment process and the timing synchronization process are implemented by multiplexing the first message and the second message. In the foregoing signaling interaction process, the member vehicle may obtain timing advance values of other member vehicles relative to the member vehicle. Therefore, by designing the corresponding group establishment and synchronization processes, signaling overheads are reduced, and a delay is reduced.

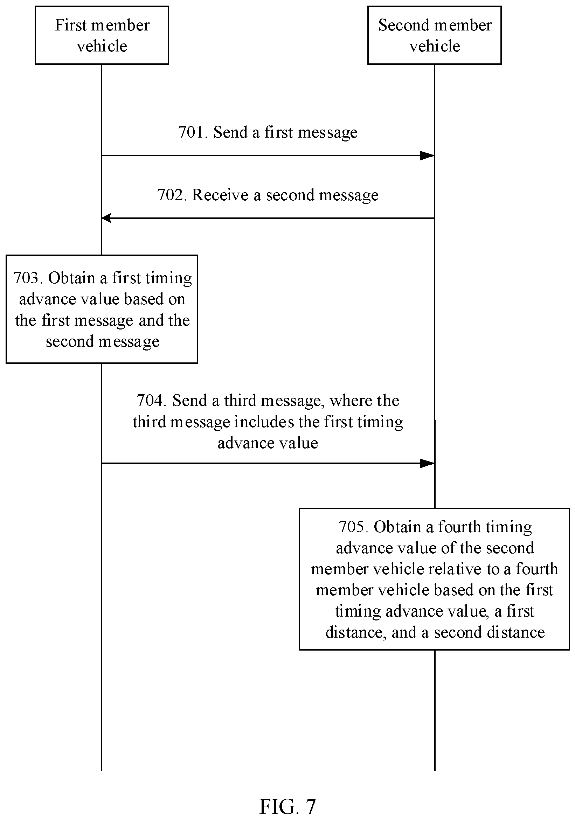

FIG. 7 is a specific schematic flowchart according to another embodiment of this application. In the scenario of FIG. 7, it is assumed that the terminal devices are vehicles. The multicast group includes plurality of member vehicles, and the member vehicles in the multicast group can freely communicate with each other. In this scenario, member vehicles in the group drive in a same road direction. Any member vehicle can initiate a group establishment process. For example, it may be assumed that a member vehicle traveling in the lead is the member vehicle that initiates group establishment. If a distance between member vehicles is known, a member vehicle may determine a timing advance value between the member vehicle and other member vehicles based on a timing advance value between the member vehicle and the member vehicles that initiates group establishment. For brevity, content in FIG. 7 that is the same as or similar to that in the foregoing description is not described herein again. The method in FIG. 7 includes the following steps.

S701. A first member vehicle sends a first message, where the first message is used to establish a multicast group, and correspondingly, a second member vehicle receives the first message.

Optionally, the first message may be a group establishment message or a group establishment request message.

In some examples, the first message is a sequence signal that can be detected. The first message may be used to indicate a group identifier of the multicast group.

The first member vehicle is a member vehicle that initiates a group establishment procedure. The first member vehicle may be any member vehicle in the multicast group. The second member vehicle may be any member vehicle other than the member vehicle in the multicast group.

S702. The second member vehicle detects the first message and sends a second message to the first member vehicle, and correspondingly, the first member vehicle receives the second message.

Optionally, the second message may be a group establishment message.

Optionally, the second message may be scrambled by using a group identifier, and the second message may be further used to indicate an identifier of the second member vehicle. For example, the second message includes the identifier of the second member vehicle.

S703. The first member vehicle obtains a first timing advance value of the second member vehicle relative to the first member vehicle based on the first message and the second message.

S704. The first member vehicle sends the first timing advance value to the second member vehicle.

For example, the first member vehicle may send a third message to the second member vehicle, where the third message includes the identifier of the second member vehicle and the first timing advance value corresponding to the identifier.

S705. After receiving the first timing advance value, the second member vehicle may determine a fourth timing advance value of a fourth member vehicle relative to the second member vehicle based on the first timing advance value, a first distance between the second member vehicle and the first member vehicle, a second distance between the second member vehicle and the fourth member vehicle.

For example, it is assumed that the first timing advance value is TA1, the fourth timing advance value is TA4, the first distance is d1, and the second distance is d2. In this case, TA4=(d2/d1)xTA1.

In this embodiment of this application, the group establishment process and the timing synchronization process are implemented by multiplexing the first message and the second message. In the foregoing signaling interaction process, the member vehicle may obtain timing advance values of other member vehicles relative to the member vehicle. Therefore, by designing the corresponding group establishment and synchronization processes, signaling overheads are reduced and a delay is reduced. In addition, the member vehicle may obtain timing advance values of the member vehicle relative to other member vehicles based on distances between the member vehicles and known timing advance values, thereby improving efficiency of timing synchronization.

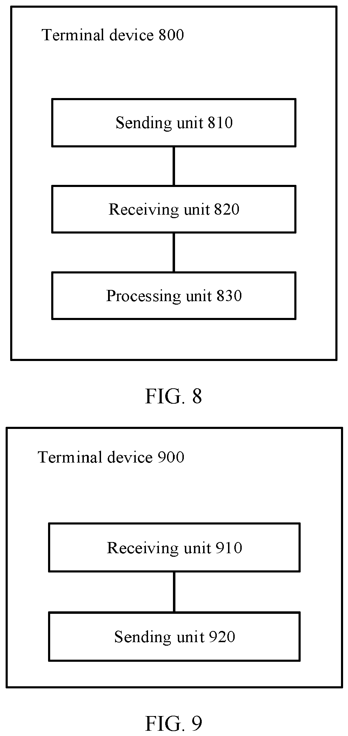

The foregoing describes the communication methods and the application environment in the embodiments of this application with reference to FIG. 1 to FIG. 7. The following describes apparatuses in the embodiments of this application with reference to FIG. 8 to FIG. 11.

FIG. 8 is a schematic structural diagram of a terminal device 800 according to an embodiment of this application. It should be understood that the terminal device 800 can perform the steps that are performed by the first terminal device in the methods of FIG. 1 to FIG. 7. To avoid repetition, details are not described herein again. The terminal device 800 includes a sending unit 810, a receiving unit 820, and a processing unit 830.

The sending unit 810 is configured to send a first message to a second terminal device, where the first message is used to establish a multicast group, and the multicast group includes the first terminal device and the second terminal device.

The receiving unit 820 is configured to receive a second message from the second terminal device, where the second message is used to confirm that the second terminal device belongs to the multicast group.

The processing unit 830 is configured to obtain a first timing advance value of the second terminal device relative to the first terminal device based on the first message and the second message.

The sending unit 810 is further configured to send a third message to the second terminal device, where the third message includes the first timing advance value.

The sending unit 810 may be replaced with a transmitter, a transceiver, or a communications interface, and the receiving unit 820 may be replaced with a receiver, a transceiver, or a communications interface. The processing unit 830 may be replaced with a processor. In an implementation, functions of the receiver, the transmitter or the communications interface may be considered to be implemented by using a transceiver circuit or a dedicated transceiver chip. The processor may be considered to be implemented by using a dedicated processing chip, a processing circuit, a processor, or a general-purpose chip.

FIG. 9 is a schematic structural diagram of a terminal device 900 according to another embodiment of this application. It should be understood that the terminal device 900 can perform the steps performed by the second terminal device in the methods of FIG. 1 to FIG. 7, or steps performed by other terminal devices. To avoid repetition, details are not described herein again. The terminal device 900 includes a receiving unit 910 and a sending unit 920.

The receiving unit 910 is configured to receive a first message from a first terminal device, where the first message is used to establish a multicast group, and the multicast group includes the first terminal device and the second terminal device.

The sending unit 920 is configured to send a second message to the first terminal device, where the second message is used to confirm that the second terminal device belongs to the multicast group.

The receiving unit 910 is further configured to receive a third message from the first terminal device, where the third message includes a first timing advance value, the first timing advance value is a timing advance value of the second terminal device relative to the first terminal device, and the first timing advance value is obtained by the first terminal device based on the first message and the second message.

The receiving unit 910 may be replaced with a receiver, a transceiver, or a communications interface, and the sending unit 920 may be replaced with a transmitter, a transceiver, or a communications interface. In an implementation, functions of the receiver, the transmitter or the communications interface may be considered to be implemented by using a transceiver circuit or a dedicated transceiver chip.

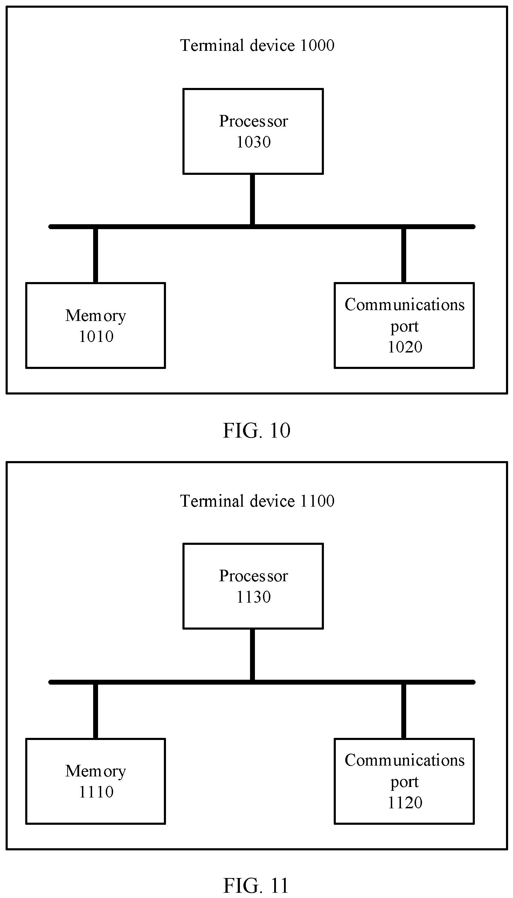

FIG. 10 is a schematic block diagram of a terminal device 1000 according to an embodiment of this application. It should be understood that the terminal device 1000 can perform the steps that are performed by the first terminal device in the methods of FIG. 1 to FIG. 7. To avoid repetition, details are not described herein again. The terminal device 1000 includes:
a memory 1010, configured to store a program;
a communications interface 1020, configured to communicate with other devices; and
a processor 1030, configured to execute the program in the memory 1010, where when the program is executed, the processor 1030 is configured to send a first message to a second terminal device over the communications interface 1020, where the first message is used to establish a multicast group, and the multicast group includes the first terminal device and the second terminal device; receive a second message from the second terminal device over the communications interface, where the second message is used to confirm that the second terminal device belongs to the multicast group; obtain a first timing advance value of the second terminal device relative to the first terminal device based on the first message and the second message; and send a third message to the second terminal device over the communications interface, where the third message includes the first timing advance value.

It should be understood that the terminal device shown in FIG. 10 may be a vehicle-mounted device, or may be a chip, a circuit, or another type of terminal device, for example, a chip or a circuit that can be disposed in a vehicle-mounted device. Further, the communications interface 1020 can be interchanged with a transceiver. The transceiver includes a receiver and a transmitter. Still further, the terminal device 1000 can further include a bus system.

The processor 1030, the memory 1010, the receiver, and the transmitter are connected to each other through the bus system. The processor 1030 is configured to execute an instruction stored in the memory 1010, to control the receiver to receive a signal, to control the transmitter to send a signal, and to complete the steps of the network device in the communication method in this application. The receiver and the transmitter may be a same physical entity or different physical entities. If being the same physical entity, the receiver and the transmitter may be collectively referred to as a transceiver. The memory 1010 may be integrated in the processor 1030, or may be disposed separately from the processor 1030.

In an implementation, functions of the receiver and the transmitter may be considered to be implemented by using a transceiver circuit or a dedicated transceiver chip. The processor 1030 may be considered to be implemented by using a dedicated processing chip, a processing circuit, a processor, or a general-purpose chip.

In another implementation, the network device provided in the embodiments of this application may be considered to be implemented in a form of a general-purpose computer. That is, program code for implementing functions of the processor 1030, the receiver, and the transmitter are stored in the memory, and the general-purpose processor implements the functions of the processor 1030, the receiver, and the transmitter by executing the code in the memory.

FIG. 11 is a schematic block diagram of a terminal device 1100 according to an embodiment of this application. It should be understood that the terminal device 1100 can perform the steps that are performed by the second terminal device in the methods of FIG. 1 to FIG. 7. To avoid repetition, details are not described herein again. The terminal device 1100 includes:
a memory 1110, configured to store a program;
a communications interface 1120, configured to communicate with other devices; and
a processor 1130, configured to execute the program in the memory 1110, where when the program is executed, the processor 1130 is configured to receive a first message from a first terminal device over the communications interface 1120, where the first message is used to establish a multicast group, and the multicast group includes the first terminal device and the second terminal device; send a second message to the first terminal device over the communications interface 1120, where the second message is used to confirm that the second terminal device belongs to the multicast group; and receive a third message from the first terminal device over the communications interface 1120, where the third message includes a first timing advance value, the first timing advance value is a timing advance value of the second terminal device relative to the first terminal device, and the first timing advance value is obtained by the first terminal device based on the first message and the second message.

It should be understood that the terminal device shown in FIG. 11 may be a vehicle-mounted device, or may be a chip, a circuit, or another type of terminal device, for example, a chip or a circuit that can be disposed in a vehicle-mounted device. Further, the communications interface 1120 can be interchanged with a transceiver. The transceiver includes a receiver and a transmitter. Still further, the terminal device 1100 can further include a bus system.

The processor 1130, the memory 1110, the receiver, and the transmitter are connected to each other through the bus system. The processor 1130 is configured to execute an instruction stored in the memory 1110, to control the receiver to receive a signal, to control the transmitter to send a signal, and to complete the steps of the network device in the communication method in this application. The receiver and the transmitter may be a same physical entity or different physical entities. If being the same physical entity, the receiver and the transmitter may be collectively referred to as a transceiver. The memory 1110 may be integrated in the processor 1130, or may be disposed separately from the processor 1130.

In an implementation, functions of the receiver and the transmitter may be considered to be implemented by using a transceiver circuit or a dedicated transceiver chip. The processor 1130 may be considered to be implemented by using a dedicated processing chip, a processing circuit, a processor, or a general-purpose chip.

In another implementation, the network device provided in the embodiments of this application may be considered to be implemented in a form of a general-purpose computer. That is, program code for implementing functions of the processor 1130, the receiver, and the transmitter are stored in the memory, and the general-purpose processor implements the functions of the processor 1130, the receiver, and the transmitter by executing the code in the memory.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first terminal device, a first message to a second terminal device, wherein the first message is used to establish a multicast group, and the multicast group comprises the first terminal device and the second terminal device;
receiving, by the first terminal device, a second message from the second terminal device, wherein the second message is used to confirm that the second terminal device belongs to the multicast group;
obtaining, by the first terminal device, a first timing advance value of the second terminal device relative to the first terminal device based on the first message and the second message; and
sending, by the first terminal device, a third message to the second terminal device, wherein the third message comprises the first timing advance value.

2. The communication method according to claim 1, wherein the first message is a sequence signal that can be detected.

3. The communication method according to claim 1 or 2, wherein the sequence signal that can be detected is a pseudo-random sequence signal.

4. The communication method according to any one of claims 1 to 3, wherein the obtaining, by the first terminal device, a first timing advance value of the second terminal device relative to the first terminal device based on the first message and the second message comprises:
obtaining, by the first terminal device, the first timing advance value based on a sending moment of the first message and a receiving moment of the second message.

5. The communication method according to any one of claims 1 to 4, wherein the multicast group further comprises a third terminal device, and the method further comprises:
receiving, by the first terminal device, an intra-group synchronization signal sent by the third terminal device;
sending, by the first terminal device, a feedback acknowledgment message to the third terminal device, wherein the feedback acknowledgment message is used to respond to the intra-group synchronization signal; and
receiving, by the first terminal device, a fourth message sent by the third terminal device, wherein the fourth message comprises a second timing advance value, the second timing advance value is a timing advance value of the first terminal device relative to the third terminal device, and the second timing advance value is obtained by the third terminal device based on the intra-group synchronization signal and the feedback acknowledgment message.

6. The communication method according to any one of claims 1 to 5, wherein the third message further comprises an identifier of the second terminal device.

7. The communication method according to any one of claims 1 to 6, wherein the first message comprises a group identifier of the multicast group.

8. The communication method according to any one of claims 1 to 7, wherein the second message comprises the identifier of the second terminal device and the group identifier.

9. A communication method, comprising:
receiving, by a second terminal device, a first message from a first terminal device, wherein the first message is used to establish a multicast group, and the multicast group comprises the first terminal device and the second terminal device;
sending, by the second terminal device, a second message to the first terminal device, wherein the second message is used to confirm that the second terminal device belongs to the multicast group; and
receiving, by the second terminal device, a third message from the first terminal device, wherein the third message comprises a first timing advance value, the first timing advance value is a timing advance value of the second terminal device relative to the first terminal device, and the first timing advance value is obtained by the first terminal device based on the first message and the second message.

10. The communication method according to claim 9, wherein the first message is a sequence signal that can be detected.

11. The communication method according to claim 9 or 10, wherein the sequence signal that can be detected is a pseudo-random sequence signal.

12. The communication method according to any one of claims 9 to 11, wherein the first message comprises a group identifier of the multicast group.

13. The communication method according to any one of claims 9 to 12, wherein the second message comprises an identifier of the second terminal device and the group identifier.

14. The communication method according to any one of claims 9 to 13, wherein after the receiving, by the second terminal device, a third message from the first terminal device, the method further comprises:
sending, by the second terminal device, an intra-group synchronization signal to a fourth terminal device, wherein the multicast group further comprises the fourth terminal device;
receiving, by the second terminal device, a feedback acknowledgment message from the fourth terminal device, wherein the feedback acknowledgment message is used to respond to the intra-group synchronization signal;
obtaining, by the second terminal device, a third timing advance value of the fourth terminal device relative to the second terminal device based on the intra-group synchronization signal and the feedback acknowledgment message; and
sending, by the second terminal device, a fifth message to the fourth terminal device, wherein the fifth message comprises the third timing advance value.

15. The communication method according to claim 14, wherein the obtaining, by the second terminal device, a third timing advance value of the fourth terminal device relative to the second terminal device based on the intra-group synchronization signal and the feedback acknowledgment message comprises:
obtaining, by the second terminal device, the third timing advance value based on a sending moment of the intra-group synchronization signal and a receiving moment of the feedback acknowledgment message.

16. The communication method according to claim 14 or 15, wherein the intra-group synchronization signal comprises the group identifier and the identifier of the second terminal device.

17. The communication method according to any one of claims 14 to 16, wherein the fifth message further comprises an identifier of the fourth terminal device.

18. The communication method according to any one of claims 9 to 17, wherein the method further comprises:
obtaining, by the second terminal device, a fourth timing advance value of the second terminal device relative to a fifth terminal device based on a first distance, a second distance, and the first timing advance value, wherein the first distance is a first distance between the second terminal device and the first terminal device, and the second distance is a second distance between the second terminal device and the fifth terminal device.

19. A terminal device, wherein the terminal device is a first terminal device, comprising:
a sending unit, configured to send a first message to a second terminal device, wherein the first message is used to establish a multicast group, and the multicast group comprises the first terminal device and the second terminal device;
a receiving unit, configured to receive a second message from the second terminal device, wherein the second message is used to confirm that the second terminal device belongs to the multicast group; and
a processing unit, configured to obtain a first timing advance value of the second terminal device relative to the first terminal device based on the first message and the second message, wherein
the sending unit is further configured to send a third message to the second terminal device, wherein the third message comprises the first timing advance value.

20. The terminal device according to claim 19, wherein the first message is a sequence signal that can be detected.

21. The terminal device according to claim 19 or 20, wherein the sequence signal that can be detected is a pseudo-random sequence signal.

22. The terminal device according to any one of claims 19 to 21, wherein in the aspect of obtaining a first timing advance value of the second terminal device relative to the first terminal device based on the first message and the second message, the processing unit is configured to obtain the first timing advance value based on a sending moment of the first message and a receiving moment of the second message.

23. The terminal device according to any one of claims 19 to 22, wherein the multicast group further comprises a third terminal device;
the receiving unit is further configured to receive an intra-group synchronization signal sent by the third terminal device;
the sending unit is further configured to send a feedback acknowledgment message to the third terminal device, wherein the feedback acknowledgment message is used to respond to the intra-group synchronization signal; and
the receiving unit is further configured to receive a fourth message sent by the third terminal device, wherein the fourth message comprises a second timing advance value, the second timing advance value is a timing advance value of the first terminal device relative to the third terminal device, and the second timing advance value is obtained by the third terminal device based on the intra-group synchronization signal and the feedback acknowledgment message.

24. The terminal device according to any one of claims 19 to 23, wherein the third message further comprises an identifier of the second terminal device.

25. The terminal device according to any one of claims 19 to 24, wherein the first message comprises a group identifier of the multicast group.

26. The terminal device according to any one of claims 19 to 25, wherein the second message comprises the identifier of the second terminal device and the group identifier.

27. A terminal device, comprising:
a receiving unit, configured to receive a first message from a first terminal device, wherein the first message is used to establish a multicast group, and the multicast group comprises the first terminal device and the second terminal device; and
a sending unit, configured to send a second message to the first terminal device, wherein the second message is used to confirm that the second terminal device belongs to the multicast group, wherein
the receiving unit is further configured to receive a third message from the first terminal device, wherein the third message comprises a first timing advance value, the first timing advance value is a timing advance value of the second terminal device relative to the first terminal device, and the first timing advance value is obtained by the first terminal device based on the first message and the second message.

28. The terminal device according to claim 27, wherein the first message is a sequence signal that can be detected.

29. The terminal device according to claim 27 or 28, wherein the sequence signal that can be detected is a pseudo-random sequence signal.

30. The terminal device according to any one of claims 27 to 29, wherein the first message comprises a group identifier of the multicast group.

31. The terminal device according to any one of claims 27 to 30, wherein the second message comprises an identifier of the second terminal device and the group identifier.

32. The terminal device according to any one of claims 27 to 31, wherein the terminal device further comprises a processing unit, and after the receiving unit receives the third message from the first terminal device,
the sending unit is further configured to send an intra-group synchronization signal to a fourth terminal device, wherein the multicast group further comprises the fourth terminal device;
the receiving unit is further configured to receive a feedback acknowledgment message from the fourth terminal device, wherein the feedback acknowledgment message is used to respond to the intra-group synchronization signal;
the processing unit is configured to obtain a third timing advance value of the fourth terminal device relative to the second terminal device based on the intra-group synchronization signal and the feedback acknowledgment message; and
the sending unit is further configured to send a fifth message to the fourth terminal device, wherein the fifth message comprises the third timing advance value.

33. The terminal device according to claim 32, wherein in the aspect of obtaining a third timing advance value of the fourth terminal device relative to the second terminal device based on the intra-group synchronization signal and the feedback acknowledgment message, the processing unit is configured to obtain the third timing advance value based on a sending moment of the intra-group synchronization signal and a receiving moment of the feedback acknowledgment message.

34. The terminal device according to claim 32 or 33, wherein the intra-group synchronization signal comprises the group identifier and the identifier of the second terminal device.

35. The terminal device according to any one of claims 32 to 34, wherein the fifth message further comprises an identifier of the fourth terminal device.

36. The terminal device according to any one of claims 27 to 35, wherein the terminal device further comprises the processing unit, and the processing unit is configured to obtain a fourth timing advance value of the second terminal device relative to a fifth terminal device based on a first distance, a second distance, and the first timing advance value, wherein the first distance is a first distance between the second terminal device and the first terminal device, and the second distance is a second distance between the second terminal device and the fifth terminal device.
